# EUROPEAN PATENT APPLICATION

(11) **EP 4 428 667 A1**
(43) Date of publication of application: **11.09.2024**
(21) Application number: 22906384.7
(22) Date of filing: 08.12.2022
(51) Int. Cl.: G06F 3/048

(54) **APPLICATION CARD DISPLAY METHOD AND APPARATUS, TERMINAL DEVICE, AND READABLE STORAGE MEDIUM**

(30) Priority: 17.12.2021 CN 202111560486
(71) Applicant: Huawei Technologies Co., Ltd., Shenzhen, Guangdong 518129 (CN)
(72) Inventor: ZHANG, Ming, Shenzhen, Guangdong 518129 (CN); JIANG, Hua, Shenzhen, Guangdong 518129 (CN); LI, Ziling, Shenzhen, Guangdong 518129 (CN); LV, Zhongwei, Shenzhen, Guangdong 518129 (CN)
(74) Representative: Pfenning, Meinig & Partner mbB
(86) International application number: PCT/CN2022/137497
(87) International publication number: WO 2023/109636

(57) **Abstract**

Embodiments of this application disclose an application card display method and apparatus, a terminal device, and a readable storage medium. When the terminal device is in a second form, the application card display method includes: displaying, in a second display area, a second application card of at least one first application running on the terminal device, where the second application card of the first application is obtained through conversion based on a first application card of the first application; and obtaining the second application card of the terminal device through conversion based on the first application card of the first application, and displaying the second application card in the second display area. A user may perform an operation on the first application in the second form, and use a function of the first application, so that the card displayed in the second display area can provide more abundant functions, improve intelligence of the terminal device, and provide a better use experience.

## Description

This application claims priority to Chinese Patent Application No. 202111560486.0, filed with the China National Intellectual Property Administration on December 17, 2021 and entitled "APPLICATION CARD DISPLAY METHOD AND APPARATUS, TERMINAL DEVICE, AND READABLE STORAGE MEDIUM", which is incorporated herein by reference in its entirety.

### TECHNICAL FIELD

This application relates to the terminal field, and in particular, to an application card display method and apparatus, a terminal device, and a readable storage medium.

### BACKGROUND

Currently, a terminal device may have a plurality of different forms, and in each form, may display an application card by using a different screen. For example, for a foldable terminal device, when the terminal device is unfolded, an application card may be displayed on a primary screen. When the terminal device is folded, a part of customized application card may be displayed on a secondary screen.

However, a card displayed on an existing secondary screen has a single function and low intelligence, and cannot provide a good use experience.

### SUMMARY

Embodiments of this application provide an application card display method and apparatus, a terminal device, and a readable storage medium, to resolve a problem that a card displayed on a secondary screen has a single function and low intelligence, and cannot provide a good use experience.

According to a first aspect, an embodiment of this application provides an application card display method, applied to a terminal device, where the terminal device includes a first display area and a second display area, the first display area is used to display a first application card in a first form of the terminal device, and the second display area is used to display a second application card in a second form of the terminal device.

When the terminal device is in the second form, the application card display method includes: displaying, in the second display area, the second application card of at least one first application running on the terminal device, where the second application card of the first application is obtained through conversion based on the first application card of the first application.

In a possible implementation of the first aspect, the second application card of the terminal device is obtained through conversion based on the first application card of the first application, and the second application card is displayed in the second display area. The user may perform an operation on the first application in the second form, and use a function of the first application, so that the card displayed in the second display area can provide more abundant functions, improve intelligence of the terminal device, and provide a better use experience.

In some implementations, the first application card includes a first notification card and/or a first function card. The second application card includes a second notification card and/or a second function card.

In some implementations, the first application card is the first notification card, and the second application card is the second notification card.

Obtaining the second notification card through conversion based on the first notification card of the first application includes: obtaining card content data in the first notification card; obtaining a card parameter of the second notification card according to a preset card conversion specification; and generating the second notification card based on the card content data and the card parameter.

In this embodiment, the first notification card is converted into the second notification card according to the preset card conversion specification. When the application does not perform adaptation for the second display area, the second notification card of the application can still be displayed in the second display area. An application scope is wider, and a good user experience can be provided in more scenarios.

In some implementations, a notification sent or updated by the first application is an ongoing OnGoing notification.

After the generating the second notification card, the method further includes: encapsulating the ongoing notification into the second notification card, and displaying the second notification card in the second display area; and/or updating the second notification card based on the ongoing notification.

In some implementations, the first application card is the first function card, and the second application card is the second function card.

The obtaining the second function card through conversion based on the first function card of the first application includes: when the first function card supports a floating window, generating the second function card based on a floating window interface of the first function card.

In some implementations, the first application card is the first function card, and the second application card is the second function card. When the first function card does not support the floating window, elements in the first function card and a hierarchical relationship between the elements are obtained. A layout specification of the second function card is obtained from the preset card conversion specification based on types and/or a quantity of elements. The second function card is generated based on the elements, the hierarchical relationship between the elements, and the layout specification.

In some implementations, after the second function card of the first application is displayed in the second display area, the method further includes: displaying an operation interface of the first application in response to a user operation; or switching the displayed second function card in response to a user operation.

According to a second aspect, an embodiment of this application provides an application card display apparatus, used in a terminal device, where the terminal device includes a first display area and a second display area, the first display area is used to display a first application card in a first form of the terminal device, the second display area is used to display a second application card in a second form of the terminal device.

When the terminal device is in the second form, the application card display apparatus includes: a display module, configured to display, in a second display area, the second application card of at least one first application running on the terminal device, where the second application card of the first application is obtained through conversion based on the first application card of the first application.

In some implementations, the first application card includes a first notification card and/or a first function card. The second application card includes a second notification card and/or a second function card.

In some implementations, the first application card is the first notification card, and the second application card is the second notification card.

The application card display apparatus further includes: a conversion module, configured to obtain card content data in the first notification card; obtain a card parameter of the second notification card according to a preset card conversion specification; and generate the second notification card based on the card content data and the card parameter.

In some implementations, a notification sent or updated by the first application is an ongoing OnGoing notification.

The display module is further configured to: encapsulate the ongoing notification into the second notification card and display the second notification card in the second display area; and/or update the second notification card based on the ongoing notification.

In some implementations, the first application card is the first function card, and the second application card is the second function card.

The conversion module is further configured to: when the first function card supports a floating window, generate the second function card based on a floating window interface of the first function card.

In some implementations, the first application card is the first function card, and the second application card is the second function card. The conversion module is further configured to: when the first function card does not support the floating window, obtain elements in the first function card and a hierarchical relationship between the elements; obtain a layout specification of the second function card from the preset card conversion specification based on types and/or a quantity of elements; and generate the second function card based on the elements, the hierarchical relationship between the elements, and the layout specification.

In some implementations, the display module is further configured to display an operation interface of the first application in response to a user operation; or switch the displayed second function card in response to a user operation.

According to a third aspect, an embodiment of this application provides a terminal device, including a memory, a processor, and a computer program that is stored in the memory and that can be run on the processor. When the computer program is executed by the processor, the method according to the first aspect is implemented.

According to a fourth aspect, an embodiment of this application provides a computer-readable storage medium. The computer-readable storage medium stores a computer program. When the computer program is executed by a processor, the method according to the first aspect is implemented.

According to a fifth aspect, an embodiment of this application provides a computer program product. When the computer program product runs on a terminal device, the terminal device is enabled to perform the method according to the first aspect.

According to a sixth aspect, an embodiment of this application provides a chip system. The chip system includes a memory and a processor. The processor executes a computer program stored in the memory, to implement the method according to the first aspect.

According to a seventh aspect, an embodiment of this application provides a chip system. The chip system includes a processor. The processor is coupled to the computer-readable storage medium provided in the fourth aspect. The processor executes a computer program stored in the computer-readable storage medium, to implement the method according to the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1 shows an application scenario of an application interface display method;
FIG. 2a and FIG. 2b show an application scenario of another application interface display method;
FIG. 3 is a schematic diagram of a structure of a terminal device to which a card display method is applied;
FIG. 4A, FIG. 4B, and FIG. 4C are a schematic diagram of a software structure of a terminal device to which a card display method is applied;
FIG. 5 is another schematic diagram of a software structure of a terminal device to which a card display method is applied;
FIG. 6 is a schematic flowchart of an application card display method according to this application;
FIG. 7 shows a first notification card of a navigation application;
FIG. 8 shows a second notification card generated based on a first notification card and a template in Table 1;
FIG. 9 shows a first notification card of an online car-hailing application;
FIG. 10 shows a second notification card generated based on a first notification card and a template in Table 1;
FIG. 11 shows a second notification card generated based on an ongoing notification and a template in Table 1;
FIG. 12a and FIG. 12b show a first notification card of a recording application;
FIG. 13 shows a second notification card generated based on a first notification card during recording in a recording application and a template in Table 1;
FIG. 14 shows a second notification card generated based on a first notification card during playing in a recording application and a template in Table 1;
FIG. 15 is a schematic flowchart of another application card display method according to this application;
FIG. 16 is a schematic layout diagram of a first function card;
FIG. 17 is a schematic layout diagram of a second function card;
FIG. 18 shows a second function card of a payment application that is displayed on a secondary screen;
FIG. 19 shows an operation interface of a payment application that is displayed on a secondary screen;
FIG. 20 shows an operation interface of another second function card of a payment application that is displayed on a secondary screen;
FIG. 21 shows an operation interface of a note application that is displayed on a secondary screen;
FIG. 22 is a block diagram of a structure of an application card display apparatus according to an embodiment of this application; and
FIG. 23 is a schematic diagram of a structure of a terminal device according to an embodiment of this application.

### DESCRIPTION OF EMBODIMENTS

In the following description, for illustration instead of limitation, specific details such as a specific system structure and technology are provided, so as to thoroughly understand embodiments of this application. However, a person skilled in the art should understand that this application may also be implemented in other embodiments without these specific details. In other cases, detailed descriptions of a well-known system, apparatus, circuit, and method are omitted, so as not to obscure the description of this application with unnecessary detail.

It should be understood that the term "include"/"comprise" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context.

In addition, in the description of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or feature described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

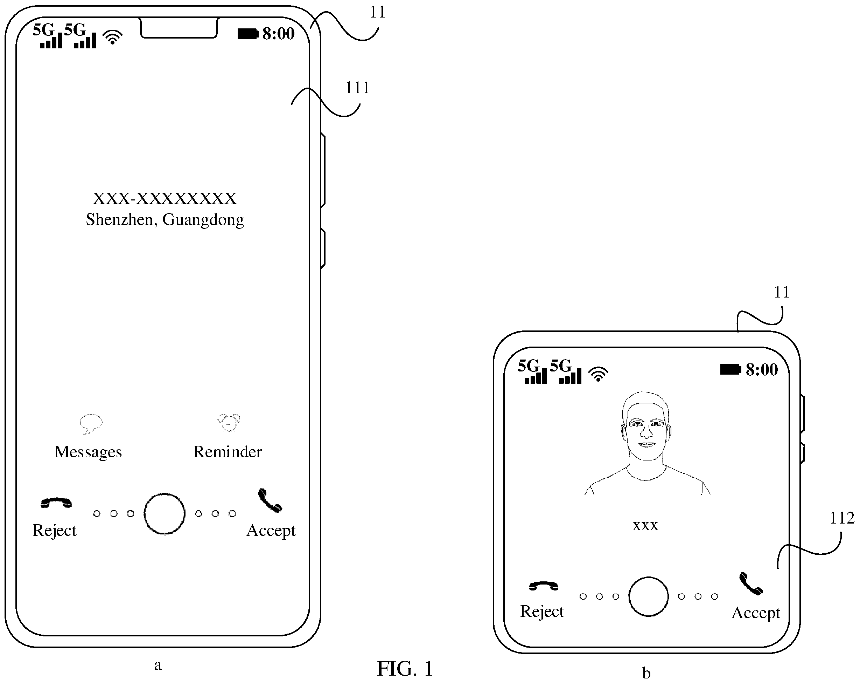

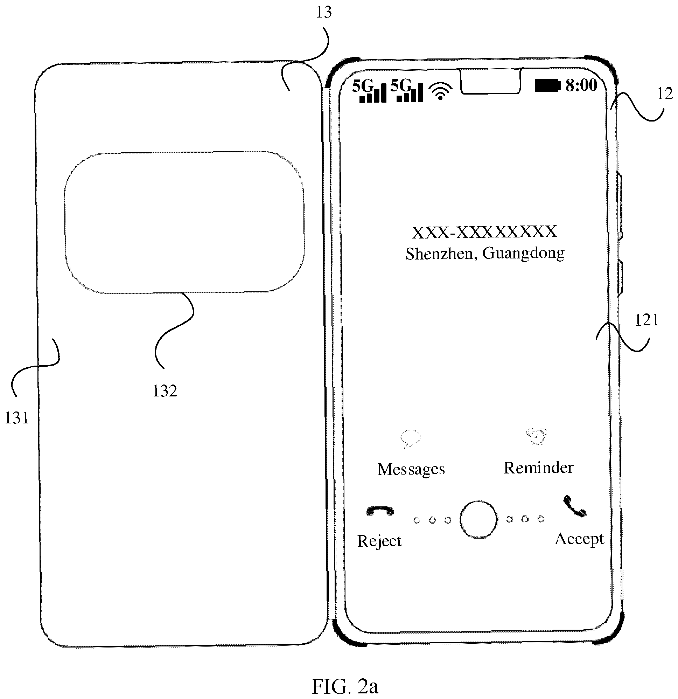

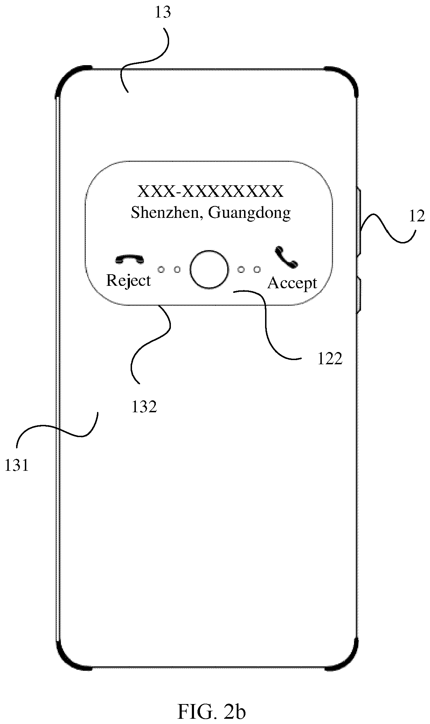

FIG. 1 and FIG. 2a and FIG. 2b respectively show application scenarios of an application interface display method.

In FIG. 1, a terminal device 11 is a foldable mobile phone. Refer to a in FIG. 1. When the foldable mobile phone is unfolded (in a first form), the foldable mobile phone may display an interface of an application by using a primary screen 111 (a first display area) of the foldable mobile phone, and receive a user operation, to implement an operation on the application. Refer to b in FIG. 1. After the foldable mobile phone is folded (in a second form), the foldable mobile phone may display an interface of the application by using a secondary screen 112 (a second display area) of the foldable mobile phone, and receive a user operation, to implement an operation on the application.

In FIG. 2a and FIG. 2b, the terminal device 12 is a smartphone, a mobile phone housing 13 is installed outside the smartphone, a flip cover 131 is disposed on the mobile phone housing 13, and a window 132 is disposed on the flip cover. Refer to FIG. 2a. When the flip cover 131 of the mobile phone housing 13 is opened (in a first form), an interface of an application may be displayed by using a primary screen 121 (a first display area) of the mobile phone housing 13, and a user operation may be received, to implement an operation on the application. Refer to FIG. 2b. After the flip cover 131 of the mobile phone housing 13 is closed (in a second form), an interface of the application is displayed in the window 132 on the primary screen 121, and a user operation is received, to implement an operation on the application. The primary screen 121 within a range of the window 132 may be considered as a secondary screen 122 (a second display area) of the terminal device 12.

It should be noted that the application interfaces displayed in the first display area and the second display area may be interfaces of application cards of the application, and the application card includes a notification card and a function card.

As an example, the notification card includes an ongoing (OnGoing) notification card, a static notification card, or the like. Notification content in the ongoing notification card (ongoing card for short) is dynamic, and content displayed in the ongoing notification card may be changed by refreshing the notification content. For example, a notification card of a navigation application is an ongoing notification card, and navigation information displayed in the notification card is updated based on a moving speed and a moving direction of a user.

Notification content of the static notification card is fixed. For example, a notification card of an SMS message is a static notification card, and displayed SMS message content does not change.

The function card is a card that can provide some functions of an application. For example, a function card of a payment application may display a payment code, a collection code, or the like. A function card of a music application may provide a play/pause button, a next button, a previous button, and the like, and implement a corresponding function when a control operation acting on a corresponding button is received.

Currently, the secondary screen can display a part of customized ongoing card or function card of a third-party application or a system application. For example, a common customized ongoing card of the third-party application includes an ongoing card of a music application, and an ongoing card of the system application includes an ongoing card of a phone application. As an example, referring to FIG. 1 and FIG. 2a and FIG. 2b, when the terminal device 11 or the terminal device 12 receives a call, the ongoing card of the phone application may be displayed on the secondary screen. The ongoing card may include a phone number, a home area of the phone number, a contact avatar, answer, and hang up. When the terminal device 11 or the terminal device 12 receives a user operation indicating to answer or hang up, the phone application may perform a corresponding operation to answer or hang up the call. Alternatively, when the terminal device 11 or the terminal device 12 plays music, the ongoing card (not shown in FIG. 1 and FIG. 2a and FIG. 2b) of the music application may be displayed on the secondary screen. The ongoing card of the music application may include a music name, a picture corresponding to music, a lyric, a control component, and the like. Alternatively, when the terminal device 11 or the terminal device 12 is in standby mode, notification content (not shown in FIG. 1 and FIG. 2a and FIG. 2b), for example, a signal strength, a clock, weather information, and calendar information may be displayed on the secondary screen. However, a third-party application that is not customized cannot display an ongoing card of the third-party application on the secondary screen.

It should be noted that the ongoing card is a capability of displaying a foreground service (ForegroundService) notification on the secondary screen, and essence of the ongoing card is to encapsulate a notification. Information displayed in the ongoing card is notification information of a service with an ongoing tag, and the ongoing tag indicates that the service is an ongoing service (that is, the service is the foreground service). To prevent a service from being cleared by a system management process, it needs to specify that the service is the foreground service and the foreground service updates notification content.

However, when the application in the terminal device 11 or the terminal device 12 pushes a notification, the secondary screen usually can display only a notification message, but cannot use a function of an application corresponding to the notification message. For example, when receiving a new message notification pushed by an instant messaging application, the terminal device 11 or the terminal device 12 may display a sender and content of a new message on the secondary screen. However, if the user needs to reply to the message, the primary screen needs to be enabled to use a function of the instant messaging application.

For a problem in the conventional technology that a card displayed on an existing secondary screen has a single function and a low intelligence, this application provides an application card display method, applied to a terminal device, where the terminal device includes a first display area and a second display area, the first display area is used to display an application card in a first form of the terminal device, and the second display area is used to display an application card in a second form of the terminal device. When the terminal device is in the second form, the application card display method includes: displaying, in the second display area, the second application card of at least one first application running on the terminal device, where the second application card is an application card adapted to the second display area, and the second application card of the first application is obtained through conversion based on the first application card of the first application.

In this application, the second application card of the terminal device is obtained through conversion based on the first application card of the first application, and the second application card is displayed in the second display area. The user may perform an operation on the first application in the second form, and use a function of the first application, so that the card displayed in the second display area can provide more abundant functions, improve intelligence of the terminal device, and provide a better use experience.

The application interface display method provided in this embodiment of this application may be applied to a terminal device that has at least two display areas. For example, the terminal device may be a mobile phone, a tablet computer, a wearable device, a vehicle-mounted device, a notebook computer, an ultra-mobile personal computer (ultra-mobile personal computer, UMPC), a netbook, a personal digital assistant (personal digital assistant, PDA), or the like. A specific type of the terminal device is not limited in this embodiment of this application.

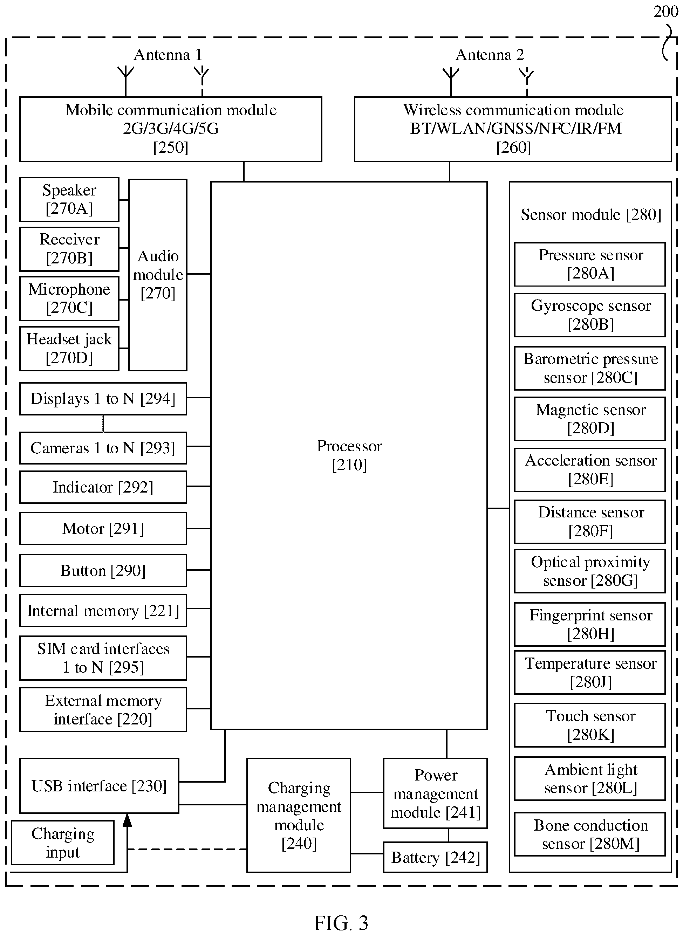

For example, FIG. 3 is a schematic diagram of a structure of a terminal device to which a card display method is applied.

Refer to FIG. 3. The terminal device 200 may be the terminal device 11 in FIG. 1, or may be the terminal device 12 in FIG. 2a and FIG. 2b, or may be another type of terminal device. The terminal device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that a structure shown in this embodiment of this application does not constitute a specific limitation on the terminal device 200. In some other embodiments of this application, the terminal device 200 may include more or fewer components than those shown in the figure, or some components may be combined, or some components may be split, or different component arrangements may be used. The components shown in the figure may be implemented by hardware, software, or a combination of software and hardware.

For example, when the terminal device 200 is a mobile phone, a tablet computer, or a smart TV, the terminal device 200 may include all components in the figure, or may include only some components in the figure, but needs to include at least one display 294.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal device 200. The controller may generate an operation control signal based on an instruction operation code and a time sequence signal, to complete control of instruction reading and instruction execution.

The memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces a waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 210 may include a plurality of groups of I2C buses. The processor 210 may be separately coupled to the touch sensor 280K, a charger, a flashlight, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the terminal device 200.

The I2S interface may be configured to perform audio communication. In some embodiments, the processor 210 may include a plurality of groups of I2S buses. The processor 210 may be coupled to the audio module 270 through an I2S bus, to implement communication between the processor 210 and the audio module 270. In some embodiments, the audio module 270 may transmit an audio signal to the wireless communication module 260 through the I2S interface.

The PCM interface may also be used to perform audio communication, and sample, quantize, and code an analog signal. In some embodiments, the audio module 270 and the wireless communication module 260 may be coupled through a PCM bus interface.

In some embodiments, the audio module 270 may alternatively transmit an audio signal to the wireless communication module 260 through the PCM interface. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication.

In some embodiments, the UART interface is generally configured to connect the processor 210 and the wireless communication module 260. For example, the processor 210 communicates with a Bluetooth module in the wireless communication module 260 through the UART interface, to implement a Bluetooth function. In some embodiments, the audio module 270 may transmit an audio signal to the wireless communication module 260 through the UART interface, to implement a function of playing music by using a Bluetooth headset.

The MIPI interface may be configured to connect the processor 210 to peripheral devices such as the display 294 and the camera 293. The MIPI interface includes a camera serial interface (camera serial interface, CSI), a display serial interface (display serial interface, DSI), and the like. In some embodiments, the processor 210 communicates with the camera 293 through the CSI interface, to implement a photographing function of the terminal device 200. The processor 210 communicates with the display 294 through the DSIinterface, to implement a display function of the terminal device 200.

It should be noted that the terminal device 200 includes at least two display areas, and each display area may correspond to an independent display 294. Alternatively, the two display areas may be different areas on one display 294. For example, referring to FIG. 1, one display area may be an entire display area of the primary screen, and the other display area may be an entire display area of the secondary screen. Refer to FIG. 2a and FIG. 2b. One display area may be an entire display area of the display 294, and the other display area may be a part of a display area on the display 294.

The GPIO interface may be configured by software. The GPIO interface may be configured as a control signal or a data signal. In some embodiments, the GPIO interface may be configured to connect the processor 210 to the camera 293, the display 294, the wireless communication module 260, the audio module 270, the sensor module 280, or the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB Type-C interface, or the like. The USB interface 230 may be configured to be connected to a charger for charging the terminal device 200, or may be configured to transmit data between the terminal device 200 and a peripheral device, or may be configured to connect to a headset for playing audio through the headset. The interface may alternatively be configured to be connected to another terminal device, for example, an AR device.

It can be understood that an interface connection relationship between the modules illustrated in this embodiment of this application is merely an example for description, and does not constitute a limitation on the structure of the terminal device 200. In some other embodiments of this application, the terminal device 200 may alternatively use an interface connection manner different from an interface connection manner in the foregoing embodiment, or use a combination of a plurality of interface connection manners.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments in which wireless charging is used, the charging management module 240 may receive a wireless charging input by using a wireless charging coil of the terminal device 200. The charging management module 240 may further supply power to the terminal device by using the power management module 241 while charging the battery 242.

The power management module 241 is configured to connect to the battery 242, the charging management module 240, and the processor 210. The power management module 241 receives an input from the battery 242 and/or an input from the charging management module 240, and supplies power to the processor 210, the internal memory 221, an external memory, the display 294, the camera 293, the wireless communication module 260, and the like. The power management module 241 may be further configured to monitor parameters such as a battery capacity, a quantity of battery cycles, and a battery health status (electric leakage and impedance).

In some other embodiments, the power management module 241 may alternatively be disposed in the processor 210. In some other embodiments, the power management module 241 and the charging management module 240 may alternatively be disposed in a same component.

A wireless communication function of the terminal device 200 may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the terminal device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that includes 2G, 3G, 4G, 5G, or the like and that is applied to the terminal device 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert an amplified signal into an electromagnetic wave for radiation through the antenna 1.

In some embodiments, at least some function modules in the mobile communication module 250 may be disposed in the processor 210. In some embodiments, at least some function modules in the mobile communication module 250 may be disposed in a same component as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 270A, the receiver 270B, and the like), or displays an image or a video through the display 294. In some embodiments, the modem processor may be an independent component. In some other embodiments, the modem processor may be independent of the processor 210, and is disposed in a same device as the mobile communication module 250 or another function module.

The wireless communication module 260 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal device 200. The wireless communication module 260 may be one or more components integrating at least one communication processing module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the terminal device 200, the antenna 1 is coupled to the mobile communication module 250, and the antenna 2 is coupled to the wireless communication module 260, so that the terminal device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellitebased augmentation system, SBAS).

The terminal device 200 implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change displayed information.

The display 294 is configured to display an image, a video, or the like, for example, a teaching video and a user action picture video in this embodiment of this application. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device 200 may include one or N displays 294, where N is a positive integer greater than 1.

The terminal device 200 may implement a photographing function by using the ISP, the camera 293, the video codec, the GPU, the display 294, the application processor, and the like.

The ISP is configured to process data fed back by the camera 293. For example, during shooting, a shutter is pressed, and light is transmitted to a photosensitive element of the camera through a lens. The photosensitive element of the camera converts an optical signal into an electrical signal, and transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 293.

The camera 293 is configured to capture a static image or a video. An optical image of an object is generated through the lens, and is projected onto the photosensitive element. A focal segment of the lens may indicate a framing range of the camera. A smaller focal segment of the lens indicates a larger framing range of the lens. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV

In this embodiment of this application, the terminal device 200 may include two or more focal segments of the camera 293.

The digital signal processor is configured to process a digital signal, and may process another digital signal in addition to the digital image signal. For example, when the terminal device 200 selects a frequency, the digital signal processor is configured to perform Fourier transform and the like on frequency energy.

The video codec is configured to compress or decompress a digital video. The terminal device 200 may support one or more video codecs. Therefore, the terminal device 200 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU may implement applications such as intelligent cognition of the terminal device 200, such as image recognition, facial recognition, speech recognition, and text understanding.

In this embodiment of this application, the NPU or another processor may be configured to perform operations such as analysis and processing on an image in a video stored in the terminal device 200.

The external memory interface 220 may be configured to connect to an external storage card such as a micro SD card, to extend a storage capability of the terminal device 200. The external storage card communicates with the processor 210 through the external memory interface 220, to implement a data storage function. For example, files such as music and videos are stored in the external storage card.

The internal memory 221 may be configured to store computer-executable program code. The executable program code includes instructions. The processor 210 runs the instructions stored in the internal memory 221 to perform various function applications and data processing of the terminal device 200. The internal memory 221 may include a program storage area and a data storage area. The program storage area may store an operating system, an application required by at least one function (for example, a sound playing function or an image playing function). The data storage area may store data (for example, audio data and a phone book) that are created during use of the terminal device 200.

In addition, the internal memory 221 may include a high-speed random access memory, or may include a nonvolatile memory, for example, at least one magnetic disk storage device, a flash memory, or a universal flash storage (universal flash storage, UFS).

The terminal device 200 may implement an audio function through the audio module 270, the speaker 270A, the receiver 270B, the microphone 270C, the headset jack 270D, the application processor, and the like.

The audio module 270 is configured to convert digital audio signal into an analog audio signal output, and is also configured to convert an analog audio input into a digital audio signal. The audio module 270 may be further configured to code and decode an audio signal. In some embodiments, the audio module 270 may be disposed in the processor 210, or some function modules in the audio module 270 may be disposed in the processor 210.

The speaker 270A, also referred to as a "horn", is configured to convert an audio electrical signal into a sound signal. The terminal device 200 may be used for listening to music or answering a hands-free call by using the speaker 270A. For example, the speaker may play a comparison analysis result provided in this embodiment of this application.

The receiver 270B, also referred to as an "earpiece", is configured to convert an audio electrical signal into a sound signal. When the terminal device 200 is used to answer a call or receive audio information, the receiver 270B may be put close to a human ear to listen to a voice.

The microphone 270C, also referred to as a "mike" or a "mic", is configured to convert a sound signal into an electrical signal. When making a call or sending voice information, the user may make a sound by using a human mouth close to the microphone 270C, and input a sound signal to the microphone 270C. At least one microphone 270C may be disposed in the terminal device 200. In some other embodiments, two microphones 270C may be disposed in the terminal device 200, to collect a sound signal and implement a noise reduction function. In some other embodiments, three, four, or more microphones 270C may alternatively be disposed in the terminal device 200, to collect a sound signal, reduce noise, recognize a sound source, implement a directional recording function, and the like.

The headset jack 270D is configured to connect to a wired headset. The headset jack 270D may be a USB interface 230, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 280A is configured to sense a pressure signal, and can convert the pressure signal into an electrical signal. In some embodiments, the pressure sensor 280A may be disposed on the display 294. There are many types of pressure sensors 280A, for example, a resistive pressure sensor, an inductive pressure sensor, and a capacitive pressure sensor. The capacitive pressure sensor may include at least two parallel plates made of conductive materials. When a force is applied to the pressure sensor 280A, a capacitance between electrodes changes. The terminal device 200 determines strength of the force based on a change of the capacitance. When a touch operation is performed on the display 294, the terminal device 200 detects strength of the touch operation by using the pressure sensor 280A. The terminal device 200 may further calculate a touch location based on a detection signal of the pressure sensor 280A.

In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 280B may be configured to determine a motion posture of the terminal device 200. In some embodiments, angular velocities of the terminal device 200 around three axes (namely, axes x, y, and z) may be determined by using the gyroscope sensor 280B. The gyroscope sensor 280B may be configured for photographing image stabilization. For example, when the shutter is pressed, the gyroscope sensor 280B detects an angle at which the terminal device 200 shakes, calculates, based on the angle, a distance for which a lens module needs to compensate, and enables the lens to cancel the shake of the terminal device 200 through reverse motion, to implement image stabilization. The gyroscope sensor 280B may be further configured for navigation and motion-controlled gaming scenarios.

The barometric pressure sensor 280C is configured to measure barometric pressure.

In some embodiments, the terminal device 200 calculates an altitude based on a barometric pressure value measured by the barometric pressure sensor 280C, to assist in positioning and navigation.

The magnetic sensor 280D includes a Hall sensor. The terminal device 200 may detect opening and closing of a flip leather case by using the magnetic sensor 280D. In some embodiments, when the terminal device 200 is a clamshell phone, the terminal device 200 may detect opening and closing of a flip cover by using the magnetic sensor 280D. Further, a feature, for example, automatic unlocking of the flip cover is set based on a detected opening or closing state of the leather case or a detected opening or closing state of the flip cover.

The acceleration sensor 280E may detect magnitudes of accelerations in various directions (usually on three axes) of the terminal device 200, and may detect a magnitude and a direction of gravity when the terminal device 200 is still. The acceleration sensor may be further configured to identify a posture of the terminal device, and is used in an application such as switching between a landscape mode and a portrait mode or a pedometer.

The distance sensor 280F is configured to measure a distance. The terminal device 200 may measure the distance in an infrared or a laser manner. In some embodiments, in a photographing scenario, the terminal device 200 may measure a distance by using the distance sensor 280F, to implement quick focusing.

The optical proximity sensor 280G may include, for example, a light-emitting diode (LED) and a photodetector such as a photodiode. The light emitting diode may be an infrared light emitting diode. The terminal device 200 emits infrared light by using the light-emitting diode. The terminal device 200 detects infrared reflected light from a nearby object by using the photodiode. When sufficient reflected light is detected, the terminal device 200 may determine that there is an object near the terminal device 200. When insufficient reflected light is detected, the terminal device 200 may determine that there is no object near the terminal device 200. The terminal device 200 may detect, by using the optical proximity sensor 280G, that the user holds the terminal device 200 close to an ear to make a call, to automatically perform screen-off for power saving. The optical proximity sensor 280G may also be configured in a leather sheath mode, and a pocket mode automatically unlocks and locks the screen.

The ambient light sensor 280L is configured to sense ambient light brightness. The terminal device 200 may adaptively adjust brightness of the display 294 based on the sensed ambient light brightness. The ambient light sensor 280L may also be configured to automatically adjust white balance when taking photos. The ambient light sensor 280L may also cooperate with the optical proximity sensor 280G to detect whether the terminal device 200 is in a pocket, to avoid an accidental touch.

The fingerprint sensor 280H is configured to collect a fingerprint. The terminal device 200 may use a feature of the collected fingerprint to implement fingerprint-based unlocking, application lock access, fingerprint-based photographing, fingerprint-based call answering, and the like.

The temperature sensor 280J is configured to detect a temperature. In some embodiments, the terminal device 200 executes a temperature processing policy based on the temperature detected by the temperature sensor 280J. For example, when the temperature reported by the temperature sensor 280J exceeds a threshold, the terminal device 200 degrades performance of a processor near the temperature sensor 280J, to reduce power consumption and implement thermal protection. In some other embodiments, when the temperature is less than another threshold, the terminal device 200 heats the battery 242 to prevent the terminal device 200 from being abnormally powered off because of the low temperature. In some other embodiments, when the temperature is less than still another threshold, the terminal device 200 boosts an output voltage of the battery 242, to prevent abnormal power-off caused by the low temperature.

The touch sensor 280K is also referred to as a "touch panel". The touch sensor 280K may be disposed on the display 294. The touch sensor 280K and the display 294 form a touchscreen. The touch sensor 280K is configured to detect a touch operation performed on or near the touch sensor. The touch sensor may transfer the detected touch operation to the application processor to determine a type of the touch event. The display 294 may provide a visual output related to the touch operation. In some other embodiments, the touch sensor 280K may alternatively be disposed on a surface of the terminal device 200 at a location different from a location of the display 294.

The bone conduction sensor 280M may obtain a vibration signal. In some embodiments, the bone conduction sensor 280M may obtain a vibration signal of a vibration bone block of a human vocal part. The bone conduction sensor 280M may also contact a human pulse, and receive a blood pressure beat signal.

In some embodiments, the bone conduction sensor 280M may alternatively be disposed in a headset, to constitute a bone conduction headset. The audio module 270 may obtain a speech signal through parsing based on the vibration signal of the vibration bone block of the human vocal part that is obtained by the bone conduction sensor 280M, to implement a speech function. The application processor may parse heart rate information based on the blood pressure beat signal obtained by the bone conduction sensor 280M, to implement a heart rate detection function.

The button 290 includes a power button, a volume button, or the like. The button 290 may be a mechanical button, or may be a touch button. The terminal device 200 may receive a button input, and generate a button signal input related to a user setting and function control of the terminal device 200.

The motor 291 may generate a vibration prompt. The motor 291 may be configured to provide an incoming call vibration prompt and a touch vibration feedback. For example, touch operations performed on different applications (for example, photo taking and audio playing) may correspond to different vibration feedback effects. The motor 291 may also correspond to different vibration feedback effects for touch operations performed on different areas of the display 294. Different application scenarios (for example, a time reminder, information receiving, an alarm clock, and a game) may also correspond to different vibration feedback effects. A touch vibration feedback effect may be further customized.

The indicator 292 may be an indicator light, and may be configured to indicate a charging status and a power change, or may be configured to indicate a message, a missed call, a notification, and the like.

The SIM card interface 295 is configured to connect to a SIM card. The SIM card may be inserted into the SIM card interface 295 or detached from the SIM card interface 295, to implement contact with or separation from the terminal device 200. The terminal device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. Types of the plurality of cards may be the same or may be different. The SIM card interface 295 is also compatible with different types of SIM cards. The SIM card interface 295 is also compatible with an external storage card. The terminal device 200 interacts with a network by using the SIM card, to implement functions such as a call function, a data communication function, and the like. In some embodiments, the terminal device 200 uses an eSIM, that is, an embedded SIM card. The eSIM card may be embedded in the terminal device 200, and cannot be separated from the terminal device 200.

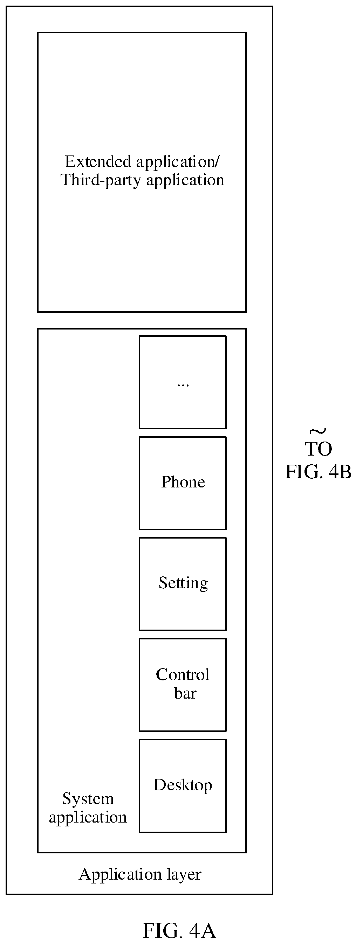

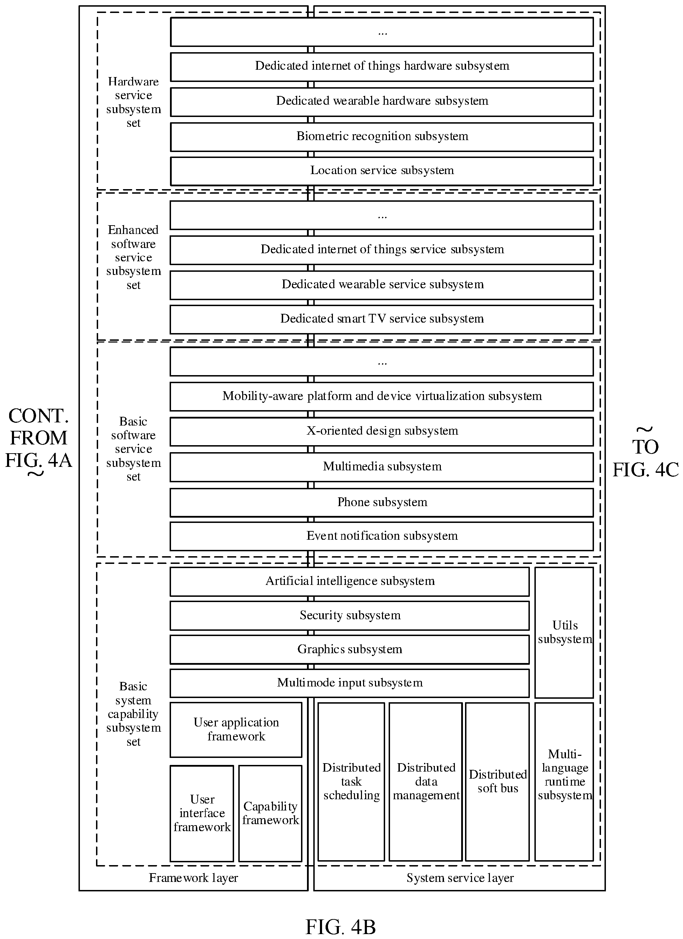

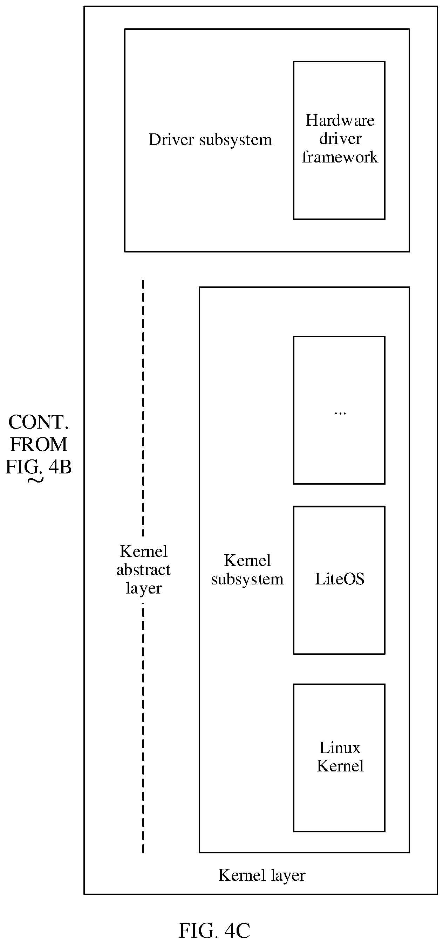

FIG. 4A, FIG. 4B, and FIG. 4C are a schematic diagram of a software structure of a terminal device to which a card display method is applied.

For example, an operating system in the terminal device 200 may be an Android (Android) system, a Linux (Linux) system, a Microsoft window (Windows) system, an Apple mobile operating system (iOS), a HarmonyOS (Harmony OS) system, or the like. The method provided in embodiments of this application is particularly applicable to a Linux system or another system derived from a Linux system. An example in which the operating system of the terminal device 200 is the HarmonyOS system is used for description herein.

In some embodiments, the HarmonyOS system may be divided into four layers, including a kernel layer, a system service layer, a framework layer, and an application layer. The layers communicate with each other by using a software interface.

As shown in FIG. 4A, FIG. 4B, and FIG. 4C, the kernel layer includes a kernel abstract layer (Kernel Abstract Layer, KAL) and a driver subsystem. The KAL includes a plurality of kernels, such as a Linux kernel and a LiteOS kernel of a lightweight internet of things system. The driver subsystem may include a hardware driver foundation (Hardware Driver Foundation, HDF). The hardware driver foundation provides a unified peripheral access capability and driver development and a management framework. A multi-core kernel layer may select a corresponding kernel for processing according to a system requirement.

The system service layer is a set of core capabilities of the HarmonyOS system. The system service layer provides a service for applications through the framework layer. The layer may include the following four subsystem sets.

Basic system capability subsystem set: Implements distributed application running, scheduling, and migration across HarmonyOS devices. The subsystem set provides the following basic capabilities: distributed soft bus, distributed data management, distributed task scheduling, multi-language runtime, Utils, multi-mode input, graphics, security, artificial intelligence (Artificial Intelligence, AI), and user program framework. The multi-language runtime provides C or C++ or JavaScript (JS) multi-language runtimes and basic system class libraries. It also provides the runtime required for static Java programs using compilers. (That is, the static Java program is a part of an application or a framework layer that is developed using Java).

Basic software service subsystem set: Provides the HarmonyOS system with common software services, including event notification, phone, multimedia, Design For X (Design For X, DFX), and MSDP & DV

Enhanced software service subsystem set: Provides the HarmonyOS system with differentiated enhanced software services, including those dedicated to smart TVs, wearables, internet of things (Internet of Things, IoT) devices, and more.

Hardware service subsystem set: Provides the HarmonyOS system with hardware services, including location, biometric recognition, as well as those dedicated to wearables and IoT devices.

The framework layer provides HarmonyOS application development with a user program framework and an ability (Ability) framework specific to a plurality of languages such as Java, C, C++, and JS; and also provides two types of user interface (User Interface, UI) frameworks (including a Java UI framework for a Java language and a JS UI framework for a JS language), and a multi-language framework application programming interface (Application Programming Interface, API) for various software and hardware services. The APIs available for different HarmonyOS devices vary based on component-based tailoring of the system.

The application layer includes system applications and third-party non-system applications. The system applications may include a default application installed on the terminal device, such as a desktop, a control bar, a setting, and a phone. An extended application may be an unnecessary application developed and designed by a manufacturer of the terminal device, for example, applications like a terminal device manager, a device change migration, notes, or weather. The third-party non-system applications can be developed by other vendors, but can run applications in the HarmonyOS system, such as games, navigation, social networking, or shopping.

An application of the HarmonyOS system includes one or more feature abilities (Feature Ability, FA) or particle abilities (Particle Ability, PA). The FA has a user interface (UI) to provide a capability of interacting with a user. However, the PA does not have a UI but provides a background task running capability and unified data access abstraction. The PA mainly provides support for the FA, for example, serve as a background service to provide a computing capability or serve as a data warehouse to provide a data access capability. Applications developed based on the FA or PA can implement specific service functions and support cross-device scheduling and distribution, providing consistent and efficient application experience for the user.

A plurality of terminal devices running the HarmonyOS system can implement hardware mutual assistance and resource sharing through the distributed soft bus, distributed device virtualization, distributed data management, and distributed task scheduling.

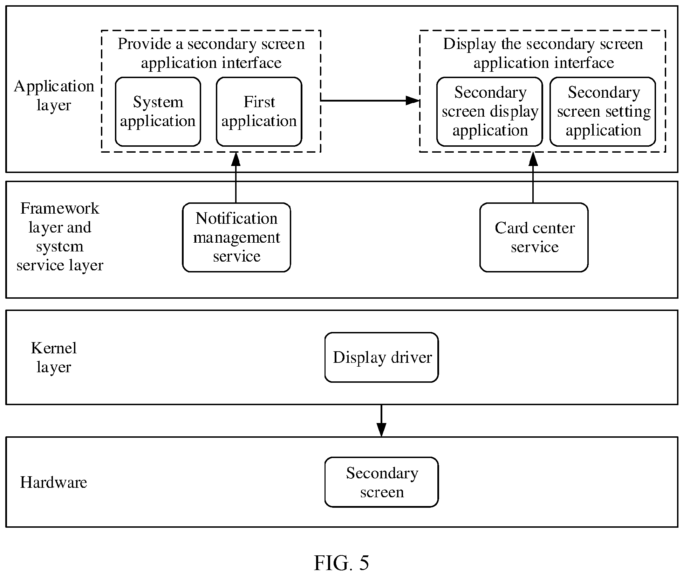

FIG. 5 is a schematic diagram of a software structure of a terminal device to which a card display method is applied.

Refer to FIG. 5. A structure specifically related to a software structure of a terminal device in this application may include a display driver in a kernel layer hardware driver framework. The display driver may drive at least one screen, and display, on the at least one screen, an interface generated by an application layer.

It should be noted that, when the terminal device in this application includes two screens, a screen corresponding to a first display area may be referred to as a primary screen, and a screen corresponding to a second display area may be referred to as a secondary screen. When the terminal device in this application includes one screen, the first display area is an entire display range of the screen, and the screen may also be referred to as a primary screen. The second display area is a partial display range of the screen, and the partial display range may be referred to as a secondary screen.

Still refer to FIG. 5. A software structure of the terminal device in this application further relates to a notification management service and a card center service at a framework layer. The notification management service is also referred to as a notification center, and may be configured to forward a notification of an application to a system user interface (User Interface, UI) for display or a home (Home) page on the secondary screen for display. The card center service is used to invoke the system application interface to query, discover, and manage applications that support displaying a card on the secondary screen.

In this application, applications that can provide the secondary screen application interface in the terminal device include at least a system application, a customized third-party application, and an uncustomized third-party application (a first application). The system application and the customized third-party application are specially adapted for the secondary screen, and a function card and a notification card can be displayed on the secondary screen without conversion. For example, the system application may include a phone application, a clock application, and the like, and the customized third-party application may include a music application, and the like. However, for the first application, because customization is not performed for the secondary screen, interfaces such as the function card and the notification card may not be displayed on the secondary screen.

In the following embodiment, an example in which the terminal device 200 is a foldable mobile phone is used to describe the application card display method. However, the application card display method provided in this application is not limited to the foldable mobile phone. For a foldable mobile phone, a first form is that the foldable mobile phone is unfolded, the first display area is an inner screen (a primary screen) of the foldable mobile phone, the second form is that the foldable mobile phone is folded, and the second display area is an outer screen (a secondary screen) of the foldable mobile phone.

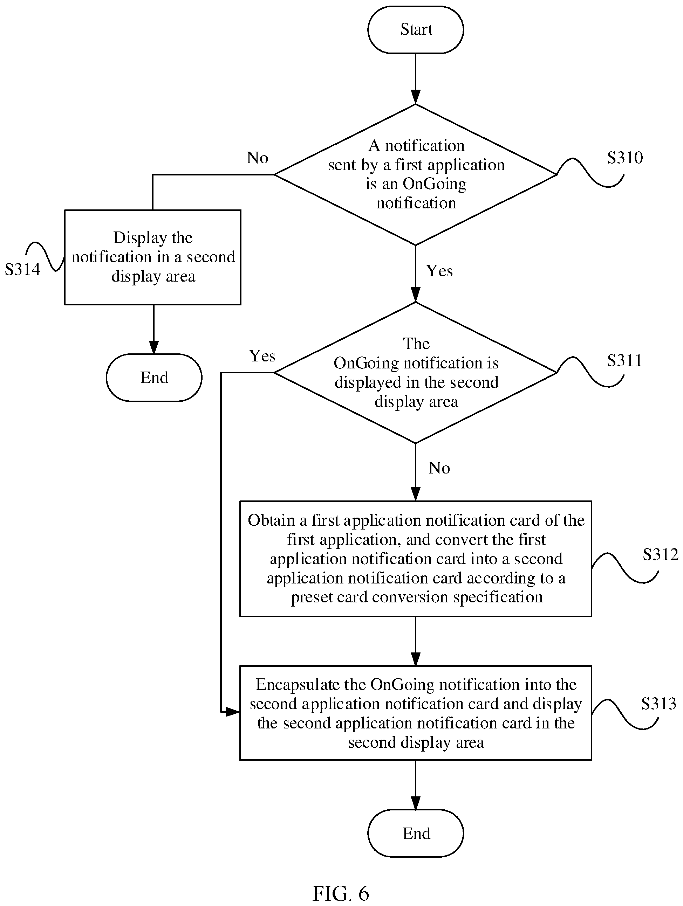

FIG. 6 is a schematic flowchart of an application card display method according to this application. As an example instead of a limitation, the method may be applied to the terminal device 200.

In this application, a first application card includes a first notification card and a first function card, and a second application card includes a second notification card and a second function card. In the embodiment shown in FIG. 6, the first application card is a first notification card, and the second application card is a second notification card.

Refer to FIG. 6. The application card display method includes the following steps.

S310: When a terminal device is in a second form, determine whether a notification sent by a first application is an ongoing notification. If the notification sent by the first application is the ongoing notification, S311 is performed. If the notification sent by the first application is not the ongoing notification, S314 is performed.

In some implementations, the first application may send or refresh a notification by using a notification management service, and the notification management service may determine, by using whether the notification has an ongoing identifier, whether the notification is the ongoing notification.

It should be noted that the ongoing notification is a notification of a foreground service, that is, a notification of an ongoing service. In actual application, continuous application ongoing notifications may be encapsulated into an ongoing card and the ongoing card is displayed. For example, when the foldable mobile phone is unfolded, a plurality of tool components fixed on the desktop may be displayed in a card form on the primary screen. Cards of some tool components like applications, such as calendar, music, and email, are ongoing cards, that is, content displayed in the tool components may be updated through the ongoing notifications.

The ongoing card may also provide a capability of displaying a foreground service notification on the secondary screen. The ongoing card may be displayed in a form of an application notification card on the secondary screen. For example, a music application is running on the foldable mobile phone. After the foldable mobile phone is folded, the music application displays an ongoing notification of the music application on the secondary screen in a form of the ongoing card. The ongoing notification of the music application may include a track, a singer, a playing progress, a lyric, and the like.

S311: Determine whether the ongoing notification is used for display in the second display area. If the ongoing notification is used for display in the second display area, S313 is performed. If the ongoing notification is not used for display in the second display area, S312 is performed.

In some implementations, because the secondary screen (the second display area) is pre-adapted by the system application and the customized third-party application, when the foldable mobile phone is folded, the ongoing notification sent by the foldable mobile phone may be encapsulated into the ongoing card based on a preset adaptation parameter, and the ongoing card is displayed on the secondary screen.

However, the first application is a third-party application that is not customized. The first application does not adapt to the secondary screen, and the ongoing notification sent by the first application can be displayed on the primary screen (a first display area) only by using a first notification card. To enable the ongoing notification to be displayed on the secondary screen, the following steps provided in S312 and S313 may be performed.

S312: Obtain a first notification card of the first application, and convert the first notification card into a second notification card according to a preset card conversion specification.

S313: Encapsulate the ongoing notification into the second notification card and display the second notification card in the second display area.

In some implementations, referring to FIG. 5, the second notification card may be generated in a secondary screen display application based on card content data and a card parameter. The card content data may come from the application notification or the first notification card, and the card parameter may come from a template provided by the preset card conversion specification.

The card content data refers to content displayed in the card, for example, may include an icon, title text, content text, and the like in the card. The card parameter is a parameter, for example, an icon position, a size, font, color, and position of the title text, and a size, font, color, and position of the content text that are set in the template.

In some implementations, as an example, Table 1 shows a possible template.

**Table 1**

| Parameter | Parameter type | Parameter description |
|---|---|---|
| templateIcon (mandatory) | Icon type | Top icon |
| templateTitle (optional) | String type | Middle title text |
| titleColor (optional) | ColorInt type | Middle title text color (white by default) |
| templateContent (mandatory) | String type | Middle content text |
| contentColor (optional) | ColorInt type | Middle content text color (white by default) |
| disColorContent (optional) | String type | Part of the middle content text whose color needs to be changed |
| disColor (optional) | ColorInt type | Changed text color |
| secondlyColor (optional) | ColorInt type | Bottom system time text color (white by default) |

In Table 1, because sizes and positions of all parts of parameters are preset, related parameters of the sizes and the positions are not shown in Table 1.

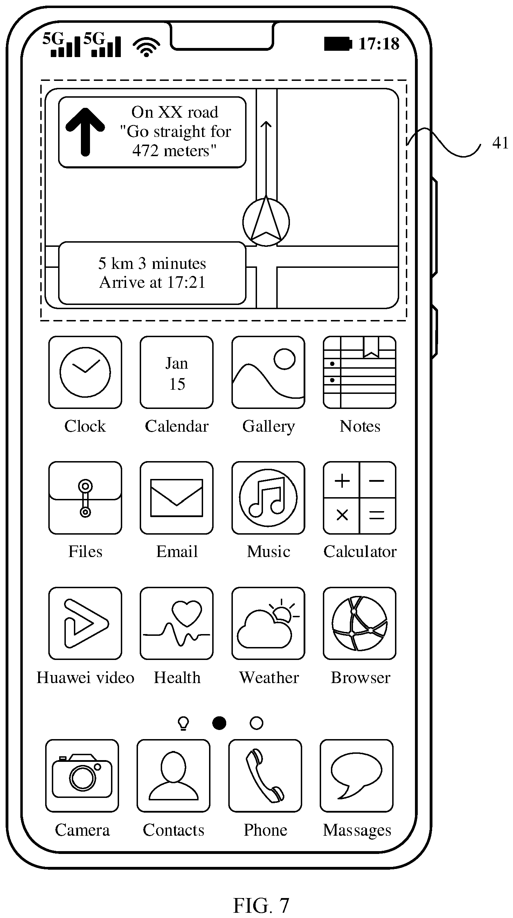

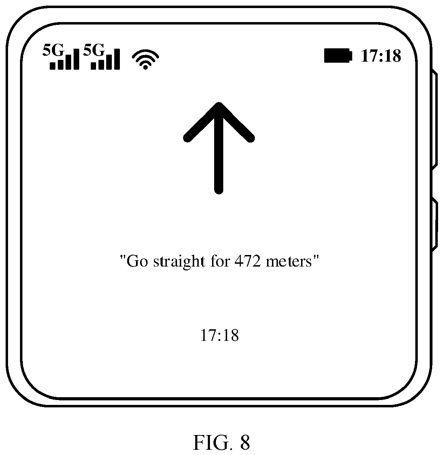

FIG. 7 shows a first notification card of a navigation application, and FIG. 8 shows a second notification card generated based on the first notification card and the template in Table 1.

Refer to FIG. 7. The first notification card 41 includes data, for example, a map, a remaining mileage, a remaining time, an estimated arrival time, a driving direction, and a driving distance in a current direction. The first notification card displayed by the navigation application on a primary screen indicates a moving direction and a moving distance of a user.

Based on the template provided in Table 1, the secondary screen display application may obtain a driving direction as a top icon, obtain a driving distance in a current direction as a middle content text, and add a bottom system time. Therefore, card content data includes the top icon indicating the direction, the middle content text indicating the driving direction and distance, and the bottom system time.

Because the card content data does not include the title, that is, does not include the "templateTitle" parameter, the "titleColor" parameter does not take effect and can be set to any value, for example, 0.

The top icon indicates the driving direction (a straight arrow). Therefore, a value of the "templateIcon" parameter is f "mIntl": 2131099653, "mInt2": 0, "mString1": "com.huawei.notification.testdemo", "mType": 2}.

The middle content text is 472 meters straight, that is, a value of the "templateContent" parameter is as follows: "Go straight for 472 meters". The color is white, that is, the value of the "contentColor" parameter is -1.

The part "472" that represents a number in the middle content text needs to change a color, that is, the value of the "disColorContent" parameter is "472" and the color changes to blue. Therefore, a value of the "disColor" parameter is -16776961.

The bottom system time is 17:18 and the color is gray, that is, a value of the "secondlyColor" parameter is -7829368.

The secondary screen display application obtains an interface of the second notification card shown in FIG. 8 through rendering based on the foregoing parameters, the sizes and the locations of all parts of the parameters, and the values of the parameters, and displays the interface of the second notification card on the secondary screen by using a display driver.

When the navigation application subsequently sends the ongoing notification, the secondary screen display application may update the second notification card based on the card content data in the ongoing notification. For example, the ongoing notification may include card content data, for example, the driving distance in the current direction and the current driving direction. When receiving the updated card content data, the secondary screen display application may render and update the second notification card based on the updated card content data. For example, when the updated card content data received by the secondary screen display application is "Go straight for 450 meters", the secondary screen display application may change the value of the "templateContent" parameter to "Go straight for 450 meters", change the value of the "disColorContent" parameter to "450", render the interface of the second notification card again, and display a rendered interface of the second notification card on the secondary screen by using the display driver.

In other implementations, for example, Table 2 shows a possible template.

**Table 2**

| Parameter | Parameter type | Parameter description |
|---|---|---|
| templateIcon (mandatory) | Icon type | Top icon |
| templateTitle (optional) | String type | Middle title text |
| titleColor (optional) | ColorInt type | Middle title text color (white by default) |
| templateContent (mandatory) | String type | Middle content text |
| contentColor (optional) | ColorInt type | Middle content text color (white by default) |
| templateSecondly (optional) | String type | Bottom secondary text |
| SecondlyColor (optional) | ColorInt type | Bottom secondary text color |

In Table 2, because sizes and positions of all parts of the parameters are preset, related parameters of the sizes and the positions are not shown in Table 2.

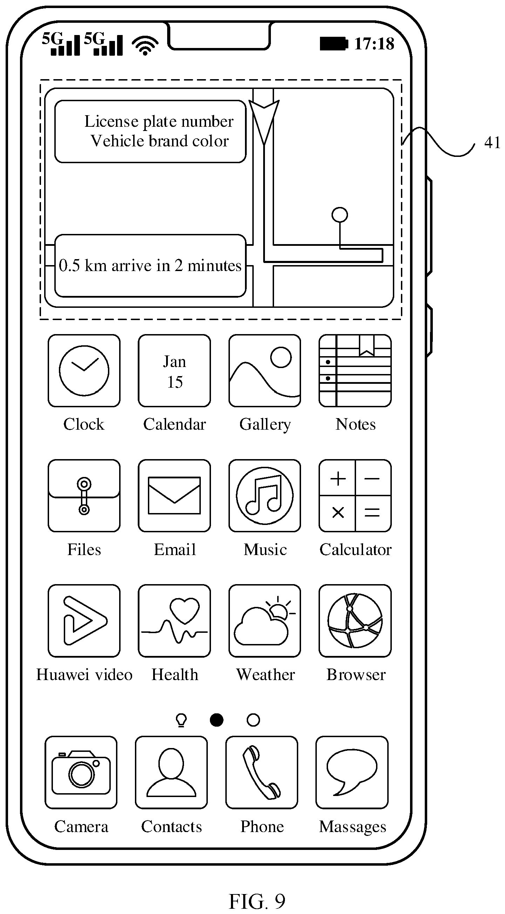

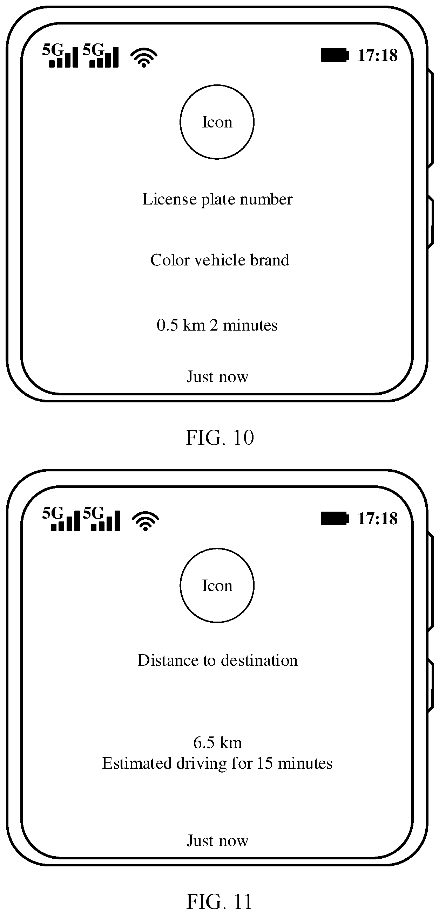

FIG. 9 shows a first notification card of an online car-hailing application, FIG. 10 shows a second notification card generated based on the first notification card and the template in Table 1, and FIG. 11 shows a second notification card generated based on the ongoing notification and the template in Table 1.

Refer to FIG. 9. The first notification card 41 includes data, for example, a map, a remaining mileage and time of arrival of the online car-hailing, a license plate number of the online car-hailing, an online car-hailing brand, and an online car-hailing color. The first notification card displayed by the navigation application on the primary screen is used to notify a user of a driving track and an arrival time of the online car-hailing.

Based on the template provided in Table 1, the secondary screen display application may obtain an icon of the online car-hailing application as a top icon, obtain the license plate number of the online car-hailing as a middle title text, obtain the remaining mileage and time of the online car-hailing, the online car-hailing brand, and the online car-hailing color as the middle content text, and add a notification update time as the bottom secondary text.

The "disColorContent" and "disColor" parameters do not exist because the middle content text does not need to change the color in the card content data.

The top icon is the icon of the online car-hailing application. Therefore, the value of templateIcon is f "mIntl": 2131099652, "mInt2": 0, "mString1": "com.huawei.notification.testdemo", "mType": 2}.

The middle title is the license plate number, that is, the value of "templateTitle" parameter is the "license plate number", and the middle title color is orange, that is, the value of "titleColor" parameter is -256.

The middle content text is the remaining mileage and time of the online car-hailing, the online car-hailing brand, and the online car-hailing color. That is, the value of the "templateContent" parameter is "Color vehicle brand\r\n 0.5 km 2 minutes". The color is white, that is, the value of the "contentColor" parameter is -1. "\r\n" indicates line feed and starts from a first character in a next line.

The bottom secondary text is the notification update time, that is, the value of the "templateSecondly" parameter is "just now", and the color is gray, that is, the value of the "secondlyColor" parameter is -7829368.

The secondary screen display application obtains an interface of the second notification card shown in FIG. 10 through rendering based on the foregoing parameters, the sizes and the locations of all parts of the parameters, and the values of the parameters, and displays the interface of the second notification card on the secondary screen by using a display driver.

When the online car-hailing application subsequently sends the ongoing notification, the secondary screen display application may update the second notification card based on the card content data in the ongoing notification. After the user is picked up by the online car-hailing, the card content data of the ongoing notification may change. For example, the remaining mileage and time of the online car-hailing in the ongoing notification are changed to a remaining mileage and estimated driving time from a destination, and the license plate number of the online car-hailing, the online car-hailing brand, and the online car-hailing color are not notified. When the updated card content data received by the secondary screen display application is "Estimated driving for 15 minutes for 6.5 km", the secondary screen display application may change a value of the "templateTitle" parameter to "Distance to destination", change the value of the "templateContent" parameter to "6.5 km\r\n estimated driving for 15 minutes", obtain the interface of the second notification card shown in FIG. 11 through rendering again, and display the rendered interface of the second notification card .

In other implementations, for example, Table 3 shows a possible template.

**Table 3**

| Parameter | Parameter type | Parameter description |
|---|---|---|
| templateIcon (mandatory) | Icon type | Top icon |
| templateTitle (mandatory) | String type | Top title text |
| titleColor (optional) | ColorInt type | Top title text color (default color #e6ffffff) |
| midContent (mandatory) | String type | Middle content text |
| midContentColor (optional) | ColorInt type | Middle content text color (default color #e6ffffff) |
| midContentBigSize (optional) | boolean type | Whether to use a large font in the middle content text (36sp/20sp, default false) |
| bottomContent (mandatory) | String type | Bottom content text |
| bottomContentColor (optional) | ColorInt type | Bottom content text color (default color #99ffffff) |
| progress (mandatory) | int type | Progress of an outer circle progress bar ranges from 0 to 100. If the value is 0, the progress bar is hidden. If the value is not 0, the progress bar is displayed. |
| progressBgColor (optional) | ColorInt type | Background color of the outer circle progress bar (default color #33ffffff) |
| progressColor (optional) | ColorInt type | Progress color of the outer circle progress bar (default color #317af7) |

In Table 3, because sizes and positions of all parts of parameters are preset, related parameters of the sizes and the positions are not shown in Table 3.

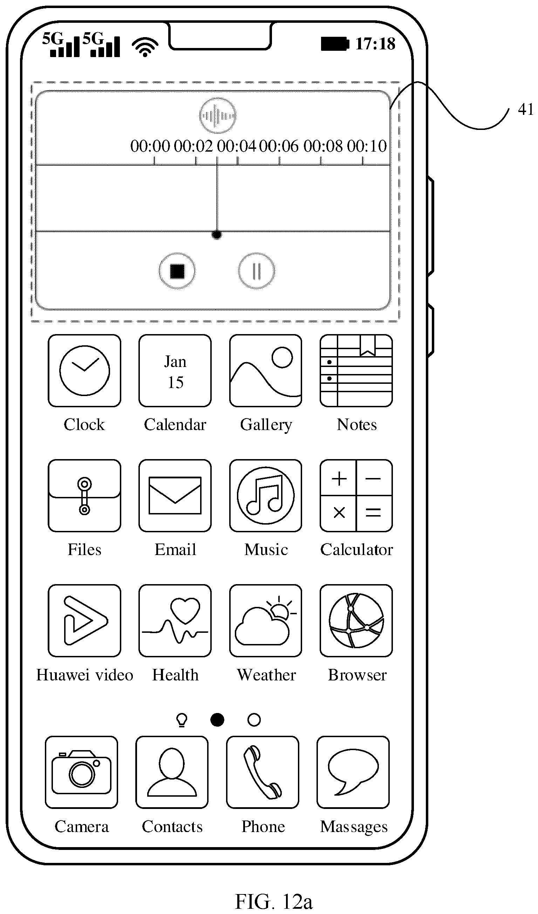

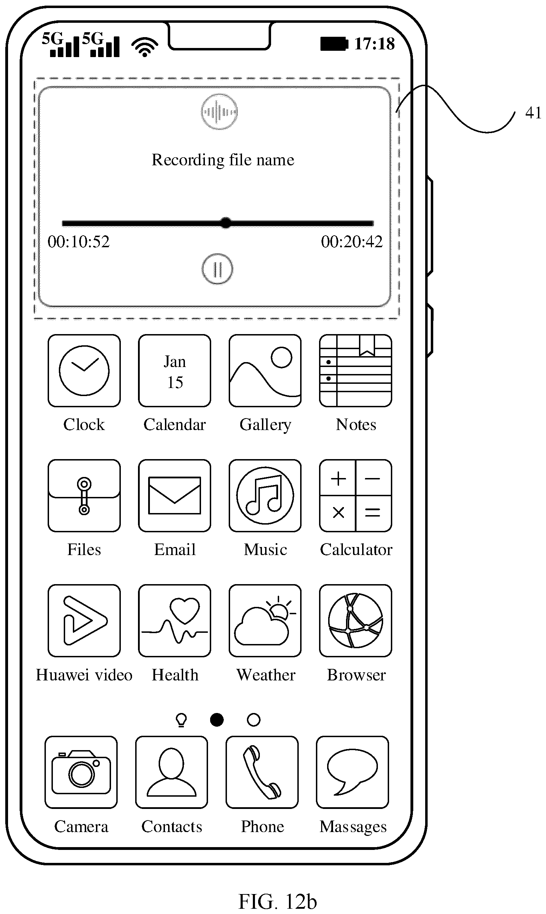

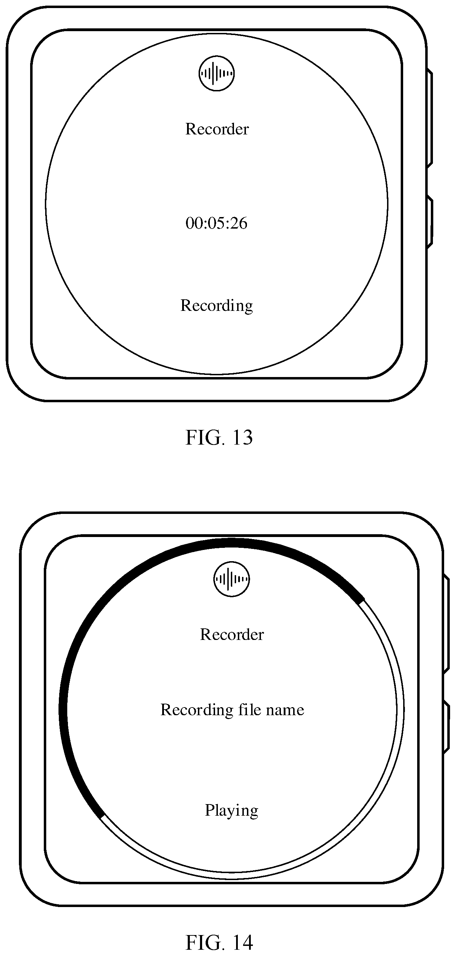

FIG. 12a shows a first notification card when a recording application is recorded, FIG. 12b shows a first notification card when the recording application is played, FIG. 13 shows a second notification card generated based on the first notification card during recording in a recording application and the template in Table 1, and FIG. 14 shows a second notification card generated based on the first notification card during playing in a recording application and the template in Table 1.

Refer to FIG. 12a. The first notification card 41 includes data, for example, an icon of the recording application and recording duration. The first notification card displayed by the recording application on the primary screen is used to notify the user of the recording duration.

Based on the template provided in Table 1, the secondary screen display application may obtain the icon of the recording application as the top icon, obtain an application name of the recording application as the middle title text, obtain the recording duration as the middle content text, and add a recording status as the bottom content text.

The top icon is the icon of the recording application. Therefore, the value of the "templateIcon" parameter is f "mIntl": 2131099683, "mInt2": 0, "mString1": "com.huawei.notification.testdemo", "mType": 2}.

The middle title is the name of the recording application, that is, the value of the "templateTitle" parameter is "recorder", and the middle title color is white, that is, the value of the "titleColor" parameter is 0.

The middle content text is the recording duration, that is, the value of the "midContent" parameter is "00:05:26". The color is white, that is, the value of the "midContentColor" parameter is 0. To make the recording duration more prominent, the middle content text may be displayed in the large font, that is, the value of the "midContentBigSize" parameter is "true".

The bottom content text indicates the recording status, that is, a value of the "bottomContent" parameter is "Recording". A color is white, that is, a value of the "bottomContentColor" parameter is 0.

During recording, an outer circle progress bar does not need to be displayed. Therefore, a value of the "progress" parameter is 0. Accordingly, a background color of the outer circle progress bar and a color of the outer circle progress bar do not need to be set. That is, values of the "progressBgColor" and "progressColor" parameters can be set to 0.

The secondary screen display application obtains an interface of the second notification card shown in FIG. 13 through rendering based on the foregoing parameters, the sizes and the locations of all parts of parameters, and the values of the parameters, and displays the interface of the second notification card on the secondary screen by using a display driver.

When recording, the recording application continuously sends an ongoing notification, and the secondary screen display application may update the second notification card based on card content data in the ongoing notification. During recording, the recording duration increases continuously, and data of the recording duration in the card content data in the ongoing notification also changes accordingly. For example, if the recording duration in the ongoing notification is 00:05:27, the value of the "midContent" parameter may be changed to "00:05:27". The interface of the second notification card is obtained through rendering again, and the rendered interface of the second notification card is displayed on the secondary screen by using the display driver.

Refer to FIG. 12b. The first notification card 41 includes data, for example, an icon of the recording application, a recording file name, and a recording file playing progress bar. The first notification card displayed by the recording application on the primary screen is used to provide a prompt of the recording file playing progress.

Based on the template provided in Table 1, the secondary screen display application may obtain the icon of the recording application as a top icon, obtain an application name of the recording application as a middle title text, obtain the recording file name as a middle content text, obtain the recording file playing progress as an outer circle progress bar, and add a playing status as a bottom content text.

The top icon is the icon of the recording application. Therefore, the value of the "templateIcon" parameter is f "mIntl": 2131099683, "mInt2": 0, "mString1": "com.huawei.notification.testdemo", "mType": 2}.

The middle title is the name of the recording application, that is, the value of the "templateTitle" parameter is "recorder", and the middle title color is white, that is, the value of the "titleColor" parameter is 0.

The middle content text is the recording file name. That is, the value of "midContent" parameter is as follows: "recording file name". The color is white, that is, the value of the "midContentColor" parameter is 0. The recording file name does not need to be displayed in a large font. That is, a value of the "midContentBigSize" parameter is "false".

The bottom content text indicates the playing status, that is, a value of the "bottomContent" parameter is "Playing". A color is white, that is, a value of the "bottomContentColor" parameter is 0.

During playing, the outer circle progress bar displays the playing progress of the recording file. Therefore, a value of the "progress" parameter is 1, a value of a "progressBgColor" parameter for a background color of the outer circle progress bar is set to 0, and a value of a "progressColor" parameter for a value of a color of the outer circle progress bar is set to 0.

The secondary screen display application obtains an interface of the second notification card shown in FIG. 14 through rendering based on the foregoing parameters, sizes and locations of all part of the parameters, and values of the parameters, and displays the interface of the second notification card on the secondary screen by using a display driver.

When the recording application continuously sends the ongoing notification, the secondary screen display application may update the second notification card based on the card content data in the ongoing notification. As the recording file is played, the playing progress data of the recording file in the card content data of the ongoing notification also changes accordingly. For example, if the playing progress of the recording file in the ongoing notification is 50%, the value of the "progress" parameter may be changed to "50". The interface of the second notification card is obtained through rendering again, and the rendered interface of the second notification card is displayed on the secondary screen by using the display driver.

S314: Display the notification in the second display area.

In some implementations, for a non-ongoing notification, the notification may be pushed to the secondary screen by using a notification management service of the system.

It should be noted that, for a customized third-party application, a value of notification_remote_flag of the customized third-party application is ongoing_remote, indicating that a corresponding second notification card is customized for the ongoing notification. The card parameter of the second notification card may be obtained from notification_remote_value. After the customized third-party application sends the ongoing notification, the secondary screen display application obtains a card parameter (Remote Views) of the second notification card from notification_remote_value, and based on card content data in the ongoing notification, displays a rendered interface of the second notification card on the secondary screen by using the display driver.

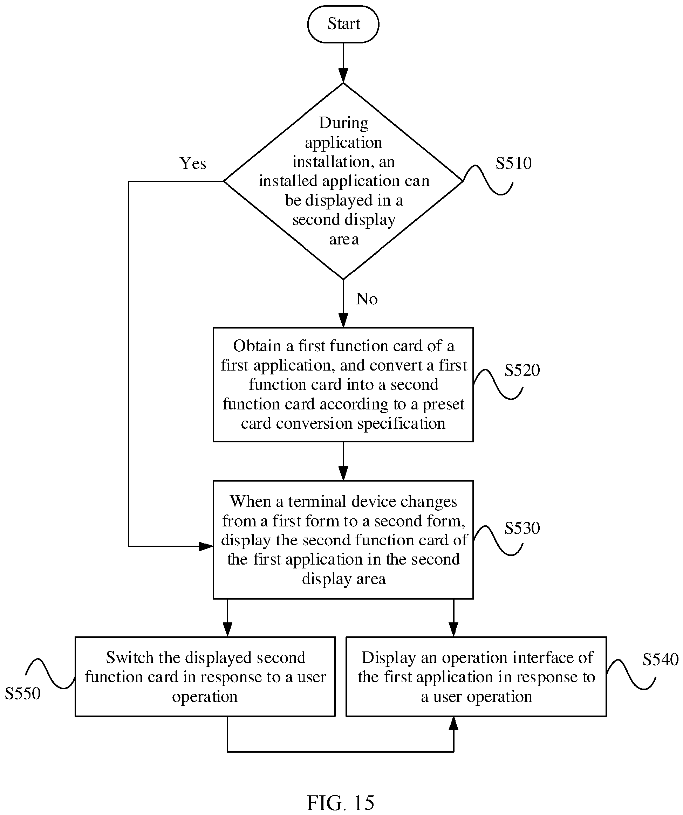

FIG. 15 is a schematic flowchart of another application card display method according to this application. As an example instead of a limitation, the method may be applied to the terminal device 200.

In this application, a first application card includes a first notification card and a first function card, and a second application card includes a second notification card and a second function card. In the embodiment shown in FIG. 15, the first application card is a first function card, and the second application card is a second function card.

Refer to FIG. 15. The application card display method includes the following steps.

S510: When installing an application, determine whether the installed application supports display in a second display area. If the installed application supports display in the second display area, S530 is performed. If the installed application does not support display in the second display area, S520 is performed.

In some implementations, referring to FIG. 5, when an application is installed on the terminal device, the terminal device registers, with a card center service, a card supported by the installed application. During registration, the card center service can identify whether a function card of the application supports display on the secondary screen. If the function card of the application supports display on the secondary screen, the application is directly registered with the card center service, and S530 is waited to be performed. If the function card of the application does not support display on the secondary screen, S520 needs to be performed first, and then registration is performed. Supporting display on the secondary screen includes providing a function card customized for the secondary screen according to a preset specification. If the display on the secondary screen is not supported, a secondary screen function card cannot be provided, or a secondary screen function card can be provided, but the secondary screen function card is not customized. The card center service center includes a list of applications that support secondary screen display. Registering with the card center service refers to adding an application name to the list of applications that support secondary screen display.

S520: Obtain a first function card of a first application, and convert the first function card into a second function card according to a preset card conversion specification.

In some implementations, the first function card includes a function card displayed by the first application on a primary screen or a function card that is not adapted to the secondary screen. The first function card may be an FA in a HarmonyOS system, a widget (Widget) in an Android system, or a card with a similar function in another system.

Converting the first function card into the second function card according to the preset card conversion specification may be adapting, according to a screen size and a shape of the secondary screen, elements in an interface layout of the first function card according to the preset card conversion specification, to obtain the second function card.

In some implementations, a layout of the second function card is the same as that of the first function card, and the second function card may be a card obtained after adaptation is performed on the first function card for a size and a shape of the secondary screen. For example, when the first function card is the FA in the HarmonyOS system, if the FA supports a floating window mode, the interface of the first function card in the floating window mode may be directly zoomed in or out according to the size of the secondary screen, and cropped or padded according to the shape of the secondary screen, to generate the second function card.

Alternatively, a layout of the second function card is different from that of the first function card, and the second function card is generated based on elements in the first function card after the first function card is parsed.

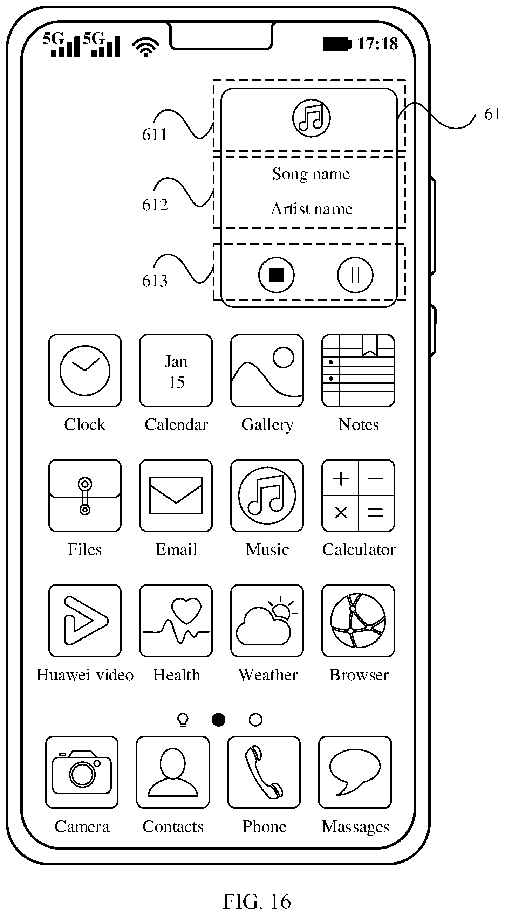

FIG. 16 is a schematic layout diagram of a first function card.

Refer to FIG. 16. A first function card 61 of a music application is shown. The first function card 61 may be an activity (activity) window in an Android system. The first function card 61 may include a title area 611, a content area 612, and an operation area 613. The title area 611 and the operation area 613 are optional. The title area 611 is used to display an element that identifies the application, for example, an application icon or an application name. The content area 612 is configured to display a specific service element of the application, for example, display data like a text, a picture, and an application entry. The operation area 613 may place an operation element of the application, for example, place an operation button or a draggable progress bar.

In some implementations, the card center service may obtain, by parsing, elements in the first function card. The first function card 61 may further include elements such as a background image and a border, and each element includes a corresponding hierarchical relationship. When the elements in the first function card 61 include the application icon, the display text, two operation buttons, and the background image, a level of the background image is a lowest level, and levels of the application icon, the display text, and the operation buttons are higher than the level of the background image. The hierarchical relationship may be represented by using a sequence of layers. For example, when the first function card 61 is generated through rendering, the layer of the background image is a bottom layer, layers of the application icon, the display text, and the operation button are sequentially superimposed on the layer of the background image, and each layer is rendered and combined according to a layer sequence, so that the interface of the first function card 61 can be output.

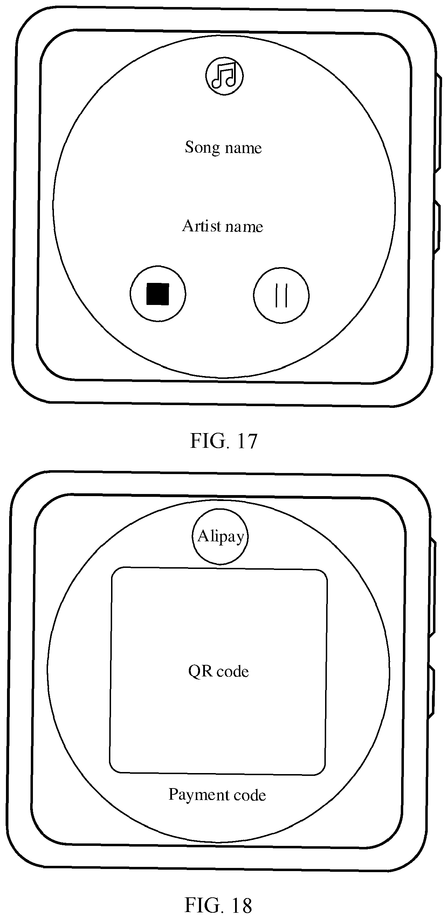

FIG. 17 is a schematic layout diagram of a second function card.

In some implementations, the second function card may include all elements in a first function card, that is, the elements in the second function card also include an application icon, a display text, two operation buttons, and a background image. A layout of the elements in the second function card may be determined according to a preset card conversion specification, and a hierarchical relationship of each element is determined according to a hierarchical relationship between the elements in the first function card. For example, referring to FIG. 17, when the secondary screen is a circle, the card center service crops and zooms the background image based on a shape and a size of the secondary screen, so that the shape and the size of the background image are adapted to the secondary screen; then, according to a type and quantity of elements, matches an applicable layout specification in the card conversion specification; and finally, arranges and renders each element according to the hierarchical relationship and the obtained layout specification, to obtain an interface of the second function card, and display the interface on the secondary screen.

S530: When the terminal device changes from a first form to a second form, display the second function card of a first application in a second display area.

In some implementations, the first application capable of displaying the second function card in the second display area is recorded in the card center service. The terminal device may receive a setting operation of a user, where the setting operation of the user indicates specific first applications displayed on the secondary screen, and parameters such as a manner and a sequence of displaying the first applications. For example, the setting operation may indicate that the second function cards of the note application, the music application, and the payment application are displayed on the secondary screen, and the second function card of the payment application is displayed by default. These card display parameters may be saved by using the secondary screen setting application. When the terminal device changes from the first form to the second form, the secondary screen setting application obtains, based on the stored card display parameter, the first application displayed in the second display area, and displays the second function card of the first application. For example, the second function card of the payment application is displayed by default. When the terminal device is a foldable mobile phone, changing the terminal device from the first form to the second form includes changing the foldable mobile phone from unfolding to folding. Alternatively, when the terminal device is a smartphone that includes a flip-cover mobile phone housing, the terminal device changes from the first form to the second form, including changing a flip cover of a mobile phone housing from opening to closing.

S540: Display an operation interface of the first application in response to a user operation.

S550: Switch the displayed second function card in response to the user operation.

In some implementations, after the second function card is displayed on the secondary screen, the user operation may be received. If the user operation is a tap operation, the operation interface of the first application is displayed in response to the user operation.

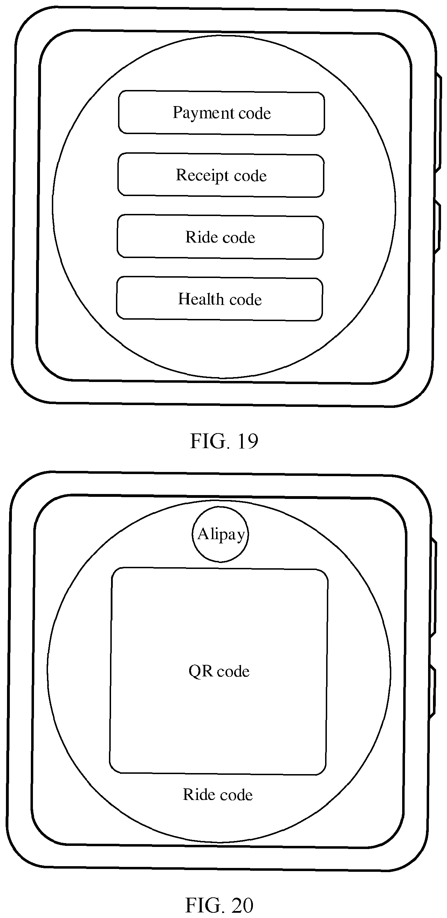

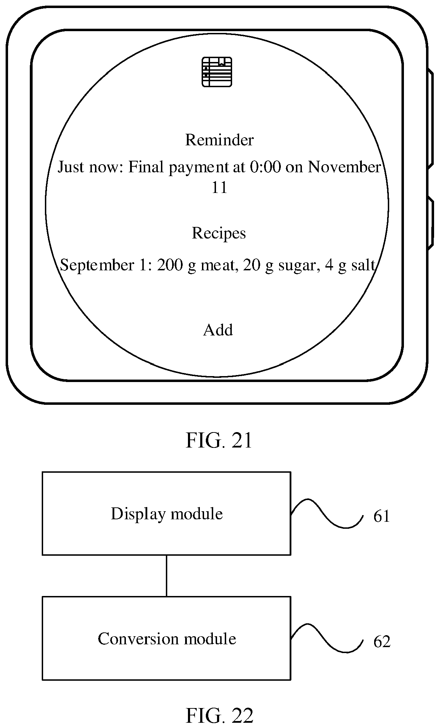

FIG. 18 shows a second function card of a payment application that is displayed on a secondary screen. FIG. 19 shows an operation interface of a payment application that is displayed on the secondary screen. FIG. 20 shows an operation interface of another second function card of a payment application that is displayed on the secondary screen. FIG. 21 shows an operation interface of a note application that is displayed on a secondary screen.

Refer to FIG. 18. The first application is a payment application, and an icon of the payment application, a QR code, and a type "payment code" of the QR code are displayed on the second function card of the payment application. After receiving the tap operation of the user, the secondary screen may display the operation interface of the payment application shown in FIG. 19. The operation interface includes a "payment code", a "Receipt code", a "Ride code", and a "Health code". When receiving the tap operation of the user again, the secondary screen may display a corresponding QR code according to the tap operation of the user. For example, when the tap operation received on the secondary screen is performed in an area for displaying the "Ride code", the second function card shown in FIG. 20 may be displayed, and an icon of the payment application, a QR code, and a type "Ride code" of the QR code are displayed in the second function card.

In still some implementations, when receiving the sliding operation of the user, the secondary screen may switch to a second function card of a different first application according to a direction of the sliding operation. For example, referring to FIG. 18, the second function card of the payment application is displayed on the current secondary screen. When the sliding operation received by the secondary screen is a leftward sliding operation, the secondary screen may switch to display a second function card (namely, an interface shown in FIG. 21) of a note application. When the sliding operation received by the secondary screen is a rightward sliding operation, the secondary screen may switch to display the second function card (that is, the interface shown in FIG. 17) of the music application.

It should be understood that sequence numbers of the steps do not mean an execution sequence in the foregoing embodiments. The execution sequence of the processes should be determined based on functions and internal logic of the processes, and should not constitute any limitation on the implementation processes of the embodiments of this application.

Corresponding to the application card display method in the foregoing embodiment, FIG. 22 is a block diagram of a structure of an application card display apparatus according to an embodiment of this application. For ease of description, only a part related to embodiments of this application is shown.

Refer to FIG. 22. An application card display apparatus is used in a terminal device. The terminal device includes a first display area and a second display area. The first display area is used to display a first application card in a first form of the terminal device, and the second display area is used to display a second application card in a second form of the terminal device.

When the terminal device is in the second form, the application card display apparatus includes: a display module 61, configured to display, in the second display area, the second application card of at least one first application running on the terminal device, where the second application card of the first application is obtained through conversion based on the first application card of the first application.

In some implementations, the first application card includes a first notification card and/or a first function card. The second application card includes a second notification card and/or a second function card.

In some implementations, the first application card is the first notification card, and the second application card is the second notification card.

The application card display apparatus further includes: a conversion module 62, configured to obtain card content data in the first notification card; obtain a card parameter of the second notification card according to a preset card conversion specification; and generating the second notification card based on the card content data and the card parameter.

In some implementations, a notification sent or updated by the first application is an ongoing OnGoing notification.

The display module 61 is further configured to: encapsulate the ongoing notification into the second notification card and display the second notification card in the second display area; and/or update the second notification card based on the ongoing notification.

In some implementations, the first application card is the first function card, and the second application card is the second function card.

The conversion module 62 is further configured to: when the first function card supports a floating window, generate the second function card based on a floating window interface of the first function card.

In some implementations, the first application card is the first function card, and the second application card is the second function card. The conversion module 62 is further configured to: when the first function card does not support the floating window, obtain elements in the first function card and a hierarchical relationship between the elements; obtain a layout specification of the second function card from the preset card conversion specification based on types and/or a quantity of elements; and generate the second function card based on the elements, the hierarchical relationship between the elements, and the layout specification.

In some implementations, the display module 61 is further configured to display an operation interface of the first application in response to a user operation; or switch the displayed second function card in response to a user operation.

It should be noted that the information exchange, execution process, and other content between the foregoing modules are based on the same concept as the method embodiment of this application. For the specific functions and technical effects, refer to the method embodiment section for details, which are not described herein again.

A person skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

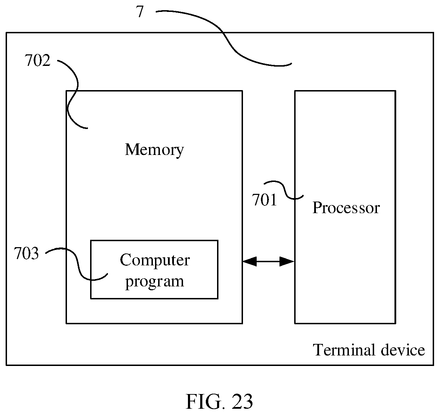

FIG. 23 is a schematic diagram of a structure of a terminal device according to an embodiment of this application.

As shown in FIG. 23, the terminal device 7 in this embodiment includes at least one processor 701 (only one processor is shown in FIG. 23), a memory 702, and a computer program 703 that is stored in the memory 702 and that can run on the at least one processor 701. The processor 701 executes the computer program 703 to implement the steps in the foregoing method embodiment.

The terminal device 7 may be a terminal device, for example, a mobile phone, a desktop computer, a notebook computer, a palmtop computer, or a cloud server. The terminal device may include but is not limited to a processor 701 and a memory 702. A person skilled in the art may understand that FIG. 23 is merely an example of the terminal device 7, and does not constitute a limitation on the terminal device 7. The terminal device 7 may include more or fewer components than those shown in the figure, or combine some components, or different components. For example, the device may further include an input/output device, a network access device, and the like.

The processor 701 may be a central processing unit (Central Processing Unit, CPU), or the processor 701 may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or transistor logic device, a discrete hardware component, or the like. The general-purpose processor may be a microprocessor, or the processor may be any conventional processor or the like.

In some embodiments, the memory 702 may be an internal storage unit of the terminal device 7, for example, a hard disk or a memory of the terminal device 7. In some other embodiments, the memory 702 may alternatively be an external storage device of the terminal device 7, for example, a removable hard disk, a smart media card (Smart Media Card, SMC), a secure digital (Secure Digital, SD) card, a flash card (Flash Card), or the like that is equipped with the terminal device 7. Further, the memory 702 may alternatively include both an internal storage unit and an external storage device of the terminal device 7. The memory 702 is configured to store an operating system, an application, a boot loader (BootLoader), data, another program, and the like, for example, program code of a computer program. The memory 702 may be further configured to temporarily store data that has been or is to be output.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the steps in the foregoing method embodiments can be implemented by the mobile terminal.

An embodiment of this application provides a chip system. The chip system includes a memory and a processor. The processor executes a computer program stored in the memory, to implement the steps in the foregoing method embodiments.

An embodiment of this application provides a chip system. The chip system includes a processor. The processor is coupled to the foregoing computer-readable storage medium. The processor executes a computer program stored in the computer-readable storage medium, to implement the steps in the foregoing method embodiments.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable medium may include at least any entity or apparatus that can carry the computer program code to a terminal device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disk. In some jurisdictions, the computer-readable medium cannot be an electrical carrier signal or a telecommunication signal according to legislation and patent practices.

In the foregoing embodiments, the description of each embodiment has respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the embodiments provided in this application, it should be understood that the disclosed method, apparatus, terminal device, and storage medium may be implemented in other manners. For example, the described apparatus embodiment is merely an example. For example, the division into the modules or units is merely logical function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application card display method, applied to a terminal device, wherein the terminal device comprises a first display area and a second display area, the first display area is used to display a first application card in a first form of the terminal device, the second display area is used to display a second application card in a second form of the terminal device, and when the terminal device is in the second form, the method comprises:
displaying, in the second display area, the second application card of at least one first application running on the terminal device, wherein the second application card of the first application is obtained through conversion based on the first application card of the first application.

2. The method according to claim 1, wherein the first application card comprises a first notification card and/or a first function card; and
the second application card comprises a second notification card and/or a second function card.

3. The method according to claim 2, wherein the first application card is the first notification card, and the second application card is the second notification card; and
obtaining the second notification card through conversion based on the first notification card of the first application comprises:
obtaining card content data in the first notification card;
obtaining a card parameter of the second notification card according to a preset card conversion specification; and
generating the second notification card based on the card content data and the card parameter.

4. The method according to claim 3, wherein a notification sent or updated by the first application is an ongoing OnGoing notification; and
after the generating the second notification card, the method further comprises:
encapsulating the ongoing notification into the second notification card, and displaying the second notification card in the second display area; and/or
updating the second notification card based on the ongoing notification.

5. The method according to any one of claims 2 to 4, wherein the first application card is the first function card, and the second application card is the second function card; and
obtaining the second function card through conversion based on the first function card of the first application comprises:
when the first function card supports a floating window, generating the second function card based on a floating window interface of the first function card.

6. The method according to any one of claims 2 to 5, wherein the first application card is the first function card, and the second application card is the second function card;
when the first function card does not support the floating window, elements in the first function card and a hierarchical relationship between the elements are obtained;
a layout specification of the second function card is obtained from the preset card conversion specification based on types and/or a quantity of the elements; and
the second function card is generated based on the elements, the hierarchical relationship between the elements, and the layout specification.

7. The method according to any one of claims 2 to 6, wherein after the second function card of the first application is displayed in the second display area, the method further comprises:
displaying an operation interface of the first application in response to a user operation; or
switching the displayed second function card in response to a user operation.

8. An application card display apparatus, used in a terminal device, wherein the terminal device comprises a first display area and a second display area, the first display area is used to display a first application card in a first form of the terminal device, the second display area is used to display a second application card in a second form of the terminal device, and when the terminal device is in the second form, the apparatus comprises:
a display module, configured to display, in the second display area, the second application card of at least one first application running on the terminal device, wherein the second application card of the first application is obtained through conversion based on the first application card of the first application.

9. The apparatus according to claim 8, wherein the first application card comprises a first notification card and/or a first function card; and
the second application card comprises a second notification card and/or a second function card.

10. The apparatus according to claim 9, wherein the first application card is the first notification card, and the second application card is the second notification card; and the apparatus further comprises a conversion module, and is further configured to:
obtain card content data in the first notification card;
obtain a card parameter of the second notification card according to a preset card conversion specification; and
generate the second notification card based on the card content data and the card parameter.

11. The apparatus according to claim 10, wherein a notification sent or updated by the first application is an ongoing OnGoing notification, and the display module is further configured to:
encapsulate the ongoing notification into the second notification card, and display the second notification card in the second display area; and/or
update the second notification card based on the ongoing notification.

12. The apparatus according to any one of claims 9 to 11, wherein the first application card is the first function card, and the second application card is the second function card; and
the conversion module is further configured to: when the first function card supports a floating window, generate the second function card based on a floating window interface of the first function card.

13. The apparatus according to any one of claims 9 to 12, wherein the first application card is the first function card, and the second application card is the second function card; and the conversion module is further configured to:
when the first function card does not support the floating window, obtain elements in the first function card and a hierarchical relationship between the elements;
obtain a layout specification of the second function card from the preset card conversion specification based on types and/or a quantity of the elements; and
generate the second function card based on the elements, the hierarchical relationship between the elements, and the layout specification.

14. The apparatus according to any one of claims 9 to 13, wherein the display module is further configured to:
display an operation interface of the first application in response to a user operation; or
switch the displayed second function card in response to a user operation.

15. A terminal device, comprising a memory, a processor, and a computer program that is stored in the memory and that can be run on the processor, wherein the processor implements the method according to any one of claims 1 to 7 when executing the computer program.

16. A computer-readable storage medium, wherein the computer-readable storage medium stores a computer program, and when the computer program is executed by a processor, the method according to any one of claims 1 to 7 is implemented.
